# EUROPÄISCHE PATENTSCHRIFT

(11) **EP 0 970 404 B1**
(45) Veröffentlichungstag und Bekanntmachung des Hinweises auf die Patenterteilung: **24.01.2001**
(21) Anmeldenummer: 98937440.0
(22) Anmeldetag: 03.06.1998
(51) Int. Cl.: G01T 1/29, G03B 42/00

(54) **ANORDNUNG ZUM AUSLESEN PHOTOSTIMULIERBARER SPEICHERLEUCHTSTOFFE**
SYSTEM FOR READING PHOTO-STIMULATED ACCUMULATIVE LUMINESCENT SUBSTANCES
SYSTEME POUR SELECTIONNER DES SUBSTANCES LUMINESCENTES ACCUMULATRICES PHOTOSTIMULABLES

(30) Priorität: 09.06.1997 DE 19724271
(43) Veröffentlichungstag der Anmeldung: 12.01.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: SCHRECK, Oliver, D-96047 Bamberg (DE); HANKE, Randolf, D-90766 Fürth (DE)
(74) Vertreter: Schoppe, Fritz, Dipl.-Ing.
(86) Internationale Anmeldenummer: EP9803313
(87) Internationale Veröffentlichungsnummer: WO9857232

(56) Entgegenhaltungen:
- EP-A- 0 342 979
- EP-A- 0 559 118
- US-A- 4 829 180

## Beschreibung

Die vorliegende Erfindung bezieht sich allgemein auf optische Abtastgeräte oder Scanner und insbesondere auf eine Vorrichtung zum Auslesen photostimulierbarer Speicherleuchtstoffe.

Die vorliegende Erfindung verwendet den Effekt der photostimulierten Lumineszenz. Zu Stoffen, die eine Photolumineszenz zeigen, gehört beispielsweise Phosphor. Ein Speicherleuchtstoff, der z. B. Phosphor enthält, absorbiert Strahlungsenergie, die Elektronen in dem Speicherleuchtstoff in höhere Energiezustände erregt. Diese höheren Energiezustände sind instabil, weshalb die Phosphorelektronen in einen Zustand mit niedrigerer Energie zurückfallen, wobei die Energiedifferenz als Licht emittiert wird. Typischerweise hat die emittierte Lichtenergie eine unterschiedliche Wellenlänge als die Strahlungsenergie, die die Photolumineszenz induziert hat.

Besonders im Bereich der Zahnmedizin, bei der eine Vielzahl von Röntgenbildern erzeugt wird, existiert ein großer Bedarf, die herkömmlichen Röntgenbilder durch neue Abbildungstechniken zu ersetzen. Es ist zeitaufwendig und teuer, Röntgenfilme zuerst zu belichten, und dann zu entwickeln, wobei der Zeitaufwand für das Belichten und Entwickeln im allgemeinen wesentlich größer ist als die Zeit, die aufgewendet wird, um das Röntgenbild tatsächlich zu betrachten, um eine diagnostische Entscheidung zu treffen. Daher wurden in letzter Zeit z. B. im zahnmedizinischen Bereich statt der herkömmlichen zu belichtenden und dann zu entwickelnden Röntgenfilme Röntgenspeicherleuchtstoffolien eingesetzt. Solche Speicherleuchtstoffolien umfassen, wie es bereits erwähnt wurde, ein Speicherphotolumineszenzmittel, wie z. B. Phosphor, das in der Lage ist, ein einmal belichtetes Muster über mehrere Tage zu halten. Eine mehrmalige Belichtung und ein höherer Dynamikbereich sind ebenfalls vorteilhafte Eigenschaften. Die durch eine Belichtung beispielsweise mit radioaktiven Stoffen aufgebrachten Bilddaten können mittels Licht mit geeigneter Wellenlänge wieder abgerufen werden. Insbesondere stimuliert oder regt ein Licht mit geeigneter Wellenlänge eine Photolumineszenz des Speicherleuchtstoffs an, wobei das von dem angeregten Speicherleuchtstoff emittierte Licht typischerweise eine andere Wellenlänge als das Anregungslicht hat.

Aus der EP 0559118 A1 ist ein Glasfaserscanner zum Abtasten einer Speicherphosphorbildplatte bekannt. Der Glasfaserscanner umfaßt ein gabelförmiges Glasfaserbündel, das Emitterfasern und Sammlungsfasern aufweist. Ferner ist eine Einrichtung zum Fokussieren von Licht in das nahe Ende der Emitterfasern vorgesehen, während ferner eine Einrichtung zum Fokussieren von Licht aus dem distalen Ende der Emitterfasern heraus auf die Phosphorbildplatte sowie eine Einrichtung zum Sammeln von Licht an dem distalen Ende der Sammlungsfasern verwendet werden, um die Empfindlichkeit und Wellenlängenauflösung der Anordnung zu erhöhen. Ein solches Glasfaserkabel wird in dem x-y-Scanner zum Abtasten einer Speicherphosphorbildplatte verwendet, um Licht von einer Lichtquelle zu den Phosphorstoffen in der Speicherphosphorbildplatte zu übertragen, und um eine durch das Licht induzierte Phosphoreszenz zu sammeln.

Der Glasfaserscanner zum Abtasten einer Speicherphosphorbildplatte gemäß der EP 0559118 A1 fordert eine Fokussierungs/Abbildungslinse, die mit den distalen Enden der zumindest einen Emitterfaser und der zumindest einen Sammlungsfaser verbunden ist. Diese Fokussierungs/Abbildungslinse, die sowohl zum Fokussieren des anregenden Lichts sowie zum Sammeln des mittels Photolumineszenz erzeugten Lichts dienen muß, verteuert die gesamte Anordnung, da sie zum einen hergestellt und zum anderen positioniert und justiert werden muß.

Die JP-1-185503 offenbart einen Photodetektor mit einer Lichtempfangsoberfläche, an der direkt eine Aufnahmeglasfaser mit einem Kern und einem Mantel angebracht ist. Die Materialien des Kerns und des Mantels der Glasfaser sind derart gewählt, daß die Brechungsindizes derselben mit steigender Wellenlänge unterschiedlich stark abnehmen, wodurch die Numerische Apertur der Aufnahmeglasfaser wellenlängenabhängig ist und zu größer werdenden Wellenlängen abnimmt. Damit hat die Aufnahmeglasfaser eine relativ gute Übertragungseigenschaft für das von einer Phosphorschicht emittierte Licht, während dieselbe eine relativ schlechte Übertragungseigenschaft für das Licht zum Anregen des Phosphors, das eine größere Wellenlänge als das von der Phosphorschicht abgegebene Phosphoreszenzlicht besitzt, wodurch die Glasfaser gewissermaßen als Hochpaß wirkt. Damit ist eine direkte Verbindung der Glasfaser mit der Lichtempfangsoberfläche des Photodetektors möglich.

Die DE 2363995 C2 offenbart ein Verfahren zum Erzeugen eines radiographischen Bildes und eine Vorrichtung zum Durchführen dieses Verfahrens. Dabei wird Licht mittels einer Strahlungsquelle durch ein Interferenzfilter hindurch auf einen Bezirk eines anregbaren Mediums geworfen, woraufhin das anregbare Medium Lichtstrahlung aussendet, die an dem Interferenzfilter reflektiert und durch eine Linse hindurch auf eine Eingangsfläche einer Bildverstärkerröhre geworfen wird.

Das U. S. Patent 5,557,452 offenbart ein konfokales Mikroskop. Dabei wird Licht, das von einem Ende einer Glasfaser abgestrahlt wird, durch ein Mikroskopobjektiv fokussiert und durch ein Fenster auf eine zu untersuchende Probe gestrahlt, wodurch bewirkt wird, daß die Probe fluoresziert. Ein Anteil des Fluoreszenzlichts, das von der Probe abgestrahlt wird, läuft wieder durch das Fenster zurück und wird durch das Mikroskopobjektiv wieder in eine Glasfaser gekoppelt, um weiterverarbeitet zu werden.

Ausgehend von diesem Stand der Technik besteht die Aufgabe der vorliegenden Erfindung darin, eine Anordnung zum Auslesen photostimulierbarer Speicherleuchtstoffe sowie einen Glasfaser-Trommelscanner zu schaffen, die weniger aufwendig hergestellt werden können.

Diese Aufgabe wird durch eine Anordnung zum Auslesen photostimulierbarer Speicherleuchtstoffe gemäß Anspruch 1 sowie durch einen Glasfaser-Trommelscanner gemäß Anspruch 6 gelöst.

Der vorliegenden Erfindung liegt die Erkenntnis zugrunde, daß zum Erreichen einer robusteren und preisgünstigeren Glasfaser-Trommelabtastvorrichtung auf eine Optik zur Fokussierung des Anregungslichts oder zur Aufnahme des angeregten Lichts verzichtet werden kann, um ein Auslesen mit hoher Auflösung und hohem Kontrast zu erreichen. Auf die Optik zur Fokussierung und zur Aufnahme des angeregten Lichts kann insbesondere verzichtet werden, wenn als Anregungsglasfaser eine Glasfaser mit einer kleinen Numerischen Apertur verwendet wird, wohingegen die Aufnahmeglasfaser eine Glasfaser mit einer großen Numerischen Apertur sein muß. Die Numerische Apertur ist in der Fachwelt bekannt und ist gleich dem Sinus des halben Raumwinkels eines maximalen Strahlungskegels, der von einer Glasfaser abgegeben werden kann, bzw. der in eine Glasfaser einkoppelbar ist. Insbesondere berechnet sich beispielsweise bei einer Stufenindexfaser die Numerische Apertur aus der Wurzel der Differenz der mittleren Brechungsindizes des Mantels der Glasfaser und des Kerns der Glasfaser. Erfindungsgemäß wird daher für die Anregungsfaser eine Glasfaser mit einer kleinen Numerischen Apertur verwendet, wodurch der von derselben abgegebene Anregungslichtkegel einen kleinen Raumwinkel aufweist, weshalb bei einem noch moderaten Abstand des Endes der Anregungsglasfaser, das in der Nähe des Speicherleuchtstoffs angeordnet ist, eine ausreichende Fleck- oder Spotgröße erhalten werden kann, die letztendlich die Auflösung definiert, mit der die vorher belichtete Speicherleuchtstoffolie ausgelesen werden kann. Dagegen muß für die Aufnahmeglasfaser, d. h. die Glasfaser, die das bei der Photolumineszenz emittierte Licht sammelt, eine große Numerische Apertur verwendet werden, die zumindest größer als die Numerische Apertur der Anregungsglasfaser ist, damit möglichst viel von dem bei der Photolumineszenz freigewordenen Licht gesammelt werden kann. Zur Erhöhung des erfaßten durch die Photolumineszenz emittierten Lichts und daher zur Erhöhung der Empfindlichkeit einer Abtastvorrichtung kann vorzugsweise eine Mehrzahl von Aufnahmeglasfasern um die Anregungsglasfaser herum angeordnet werden, wobei es für Fachleute offensichtlich ist, daß dann die Numerische Apertur einer Aufnahmeglasfaser der Mehrzahl von Aufnahmeglasfasern geringer als die Numerische Apertur einer einzigen Aufnahmeglasfaser sein kann, um noch eine ausreichende Empfindlichkeit der Speicherleuchtstoffabtastvorrichtung zu erhalten.

Bevorzugte Ausführungsbeispiele der vorliegenden Erfindung werden nachfolgend bezugnehmend auf die beiliegenden Zeichnungen detaillierter erläutert. Es zeigen:
- Fig. 1: eine Anordnung zum Auslesen photostimulierbarer Speicherleuchtstoffe gemäß der vorliegenden Erfindung;
- Fig. 2: einen Querschnitt entlang einer Linie A-A in Fig. 1;
- Fig. 3: einen Längsschnitt in dem Bereich der Linie A-A in Fig. 1; und
- Fig. 4: einen Glasfaser-Trommelscanner gemäß der vorliegenden Erfindung.

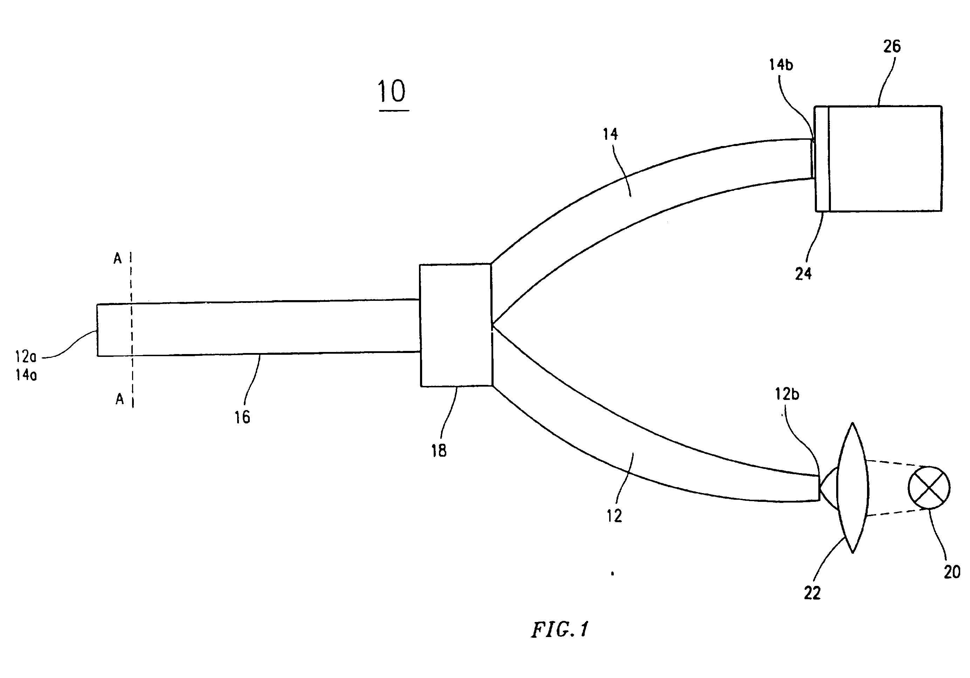

Fig. 1 zeigt eine Anordnung 10 zum Auslesen photostimulierbarer Speicherleuchtstoffe gemäß der vorliegenden Erfindung.

Die Anordnung 10 umfaßt eine Anregungsglasfaser 12 sowie eine Aufnahmeglasfaser 14, wobei ein Ende 12a und ein Ende 14a in einem Bereich nahe aneinander angeordnet sind, der in der Nähe eines photostimulierbaren Speicherleuchtstoffs positioniert werden kann. Die Anregungsglasfaser 12 und die Aufnahmeglasfaser 14 bilden also in dem Bereich der einen Enden 12a und 14a ein gemeinsames Bündel 16, das an einem Kreuzungsabschnitt 18 in die Aufnahmeglasfaser 14 und die Anregungsglasfaser 12 getrennt wird. Das andere Ende 12b der Anregungsglasfaser ist in der Nähe einer Lichtquelle 20 positioniert, mittels der über eine geeignete Linse 22 Licht in die Anregungsglasfaser 12, die eine kleine Numerische Apertur aufweist, eingekoppelt werden kann.

Das andere Ende 14b der Aufnahmeglasfaser, die eine gegenüber der Numerischen Apertur der Anregungsglasfaser 12 große Numerische Apertur aufweist, ist mit einem optischen Filter 24 zur Unterdrückung des Anregungslichtes gekoppelt, dessen Ausgang mit einer Verstärkerschaltung 26 wirksam verbunden ist. Die Numerische Apertur der Anregungsglasfaser 12 soll in einem Bereich von 0,1 bis 0,2 liegen und beträgt vorzugsweise 0,12. Dagegen soll die Numerische Apertur der Aufnahmeglasfaser 14 in einem Bereich von 0,4 bis 0,9 liegen und vorzugsweise 0,5 betragen.

Vorzugsweise wird als Anregungsglasfaser 12 eine monomodige Glasfaser verwendet, um Licht mit einer Wellenlänge von 633 nm für einen photostimulierbaren Röntgenspeicherleuchtstoff BaFBr: Eu²⁺ zu übertragen, wobei die monomodige Glasfaser hier einen Durchmesser von 3,7 µm besitzt. In die monomodige Glasfaser wird das von der Lichtquelle 20 stammende Anregungslicht mittels einer geeigneten Optik, wie z. B. dem Linsensystem 22, in die Faser eingekoppelt. Als Lichtquelle kann beispielsweise ein Laser oder eine Halogenlampe zur Anwendung kommen. Die Intensität dieses Lichts kann variiert werden. An dem einen Ende 12a der Anregungsglasfaser 12 tritt das Anregungslicht aus der monomodigen Faser aus und regt den Speicherleuchtstoff zur Photolumineszenz an.

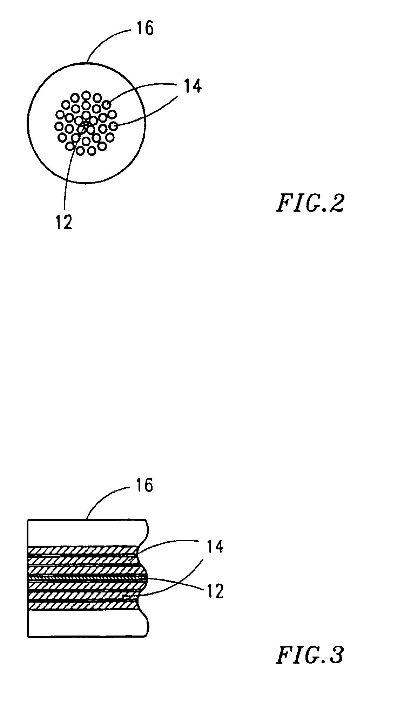

Wie es bereits erwähnt wurde, muß für die Aufnahmeglasfaser 14 eine Glasfaser mit einer möglichst hohen Numerischen Apertur verwendet werden, um einen möglichst hohen Sammlungswirkungsgrad zu erhalten. Vorzugsweise wird nicht nur eine einzige Aufnahmeglasfaser 14, sondern ein Bündel mit einer Mehrzahl von Aufnahmeglasfasern 14 verwendet, die um die Anregungsglasfaser 12 am Ende des gemeinsamen Bündels 16 herum angeordnet sind, wie es beispielsweise in Fig. 2 gezeigt ist. Das optische Filter 24 (Fig. 1), das vorzugsweise vor dem Eingang der Verstärkerschaltung 26, die ein Photomultiplizierer, eine Photodiode oder auch ein Phototransistor sein kann, angeordnet ist, dient zur Unterdrückung des an dem einen Ende 12a der Anregungsglasfaser 12 reflektierten Anregungslichts, um dasselbe von der Verstärkerschaltung 26 abzuhalten.

Fig. 3 zeigt einen Längsschnitt durch das gemeinsame Bündel 16 in dem Bereich der Linie A-A in Fig. 1, wobei auch hier die im wesentlichen konzentrische Anordnung der einzigen Anregungsglasfaser 12 inmitten der Mehrzahl von Aufnahmeglasfasern 14 dargestellt ist.

Das Ende des gemeinsamen Bündels 16, d. h. das eine Ende 12a der Anregungsglasfaser 12 sowie das eine Ende 14a der Aufnahmeglasfaser 14, wird in einem sehr geringen Abstand über eine den photostimulierbaren Speicherleuchtstoff aufweisende Speicherleuchtstoffolie geführt. Durch die geringe Numerische Apertur der Anregungsglasfaser 12 kann der Speicherleuchtstoff mit einer hohen Auflösung abgetastet werden, wobei das photostimulierte Licht, das der Speicherleuchtstoff emittiert, mittels der hohen Numerischen Apertur der mindestens einen Aufnahmeglasfaser 14 mit einem guten Wirkungsgrad gesammelt wird, um eine ausreichende Empfindlichkeit der Anordnung zu erhalten. Mit einer monomodigen Faser mit einem Durchmesser von 3,7 µm und einem Öffnungswinkel der Anregungsglasfaser von 12°, was einer Numerischen Apertur von etwa 0,2 entspricht, erhält man bei einem Abstand zwischen den einen Enden 12a, 14a und der Speicherleuchtstoffolie von 200 µm einen Anregungsfleck bzw. Anregungsspot von etwa 45 µm, was einer Auflösung von etwa 11 Lichtpunkten (LP) pro mm entspricht. Die Größe dieses Spots bzw. die Auflösung ist daher zum einen von der Numerischen Apertur der Anregungsglasfaser 12 und zum anderen von dem Abstand zwischen dem einen Ende 12a der Anregungsglasfaser und dem Speicherleuchtstoff abhängig.

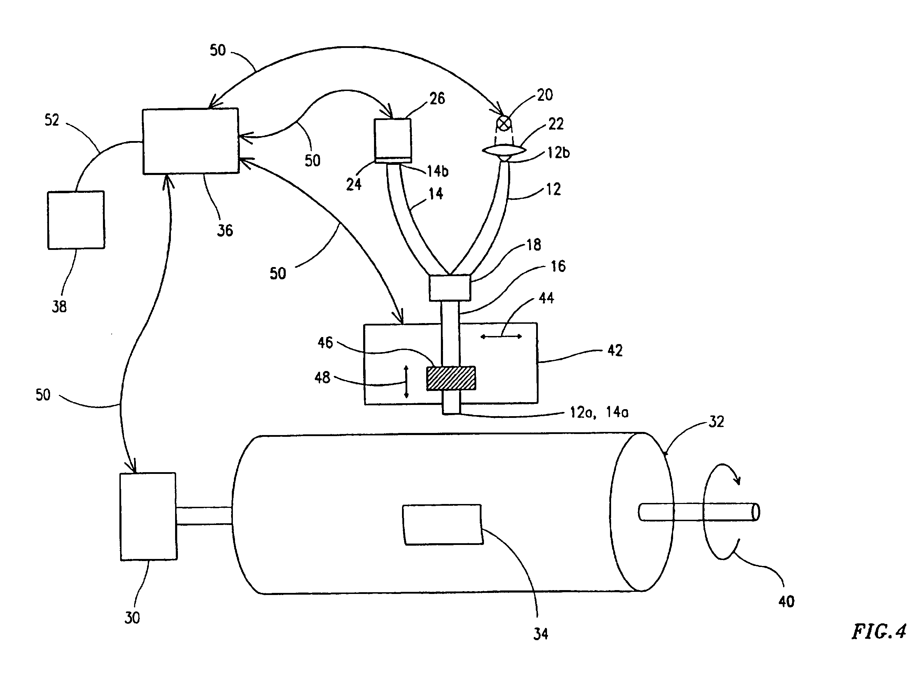

Fig. 4 zeigt ein bevorzugtes Ausführungsbeispiel eines Glasfaser-Trommelscanners gemäß der vorliegenden Erfindung, wobei die bereits in Fig. 1 erwähnten Komponenten des Glasfaser-Trommelscanners von Fig. 4 mit den gleichen Bezugszeichen bezeichnet sind und nachfolgend nicht noch einmal erläutert werden. Der Glasfaser-Trommelscanner gemäß der vorliegenden Erfindung umfaßt eine mittels eines Motors 30 drehbare Trommel 32, wobei auf der Trommel 32 eine Speicherleuchtstoffolie 34 befestig werden kann. Der Motor 30 wird mittels einer Steuereinheit 36, die beispielsweise von einem Personalcomputer 38 über geeignete Schnittstellen ansteuerbar ist, gesteuert. Der Motor 30 bewirkt eine Drehung der zylindrischen Trommel 32 um eine erste Achse, wie es durch einen Umdrehungspfeil 40 verdeutlicht ist.

Das eine Ende 12a der Anregungsglasfaser 12 sowie das andere Ende 14a der zumindest einen Aufnahmeglasfaser 14, d. h. das Ende des gemeinsamen Bündels 16, das zu der Oberfläche der zylindrischen Trommel 32 hin gerichtet ist, wird durch eine Vorschubeinrichtung 42 geführt. Der Vorschub findet vorzugsweise entlang der ersten Achse statt, wie es durch einen Vorschubpfeil 44 symbolisch angedeutet ist. Die Vorschubeinrichtung 42 ist also in der Lage, das gemeinsame Bündel 16 über die Speicherleuchtstoffolie 34 hin- und herzubewegen, nachdem der Motor 30 die Trommel 32 derart weitergedreht hat, daß die Speicherleuchtstoffolie 34 bezüglich Fig. 4 unter den einen Enden 12a bzw. 14a positioniert ist.

Vorzugsweise umfaßt der Glasfaser-Trommelscanner gemäß der vorliegenden Erfindung, der in Fig. 4 gezeigt ist, eine Positioniereinheit 46, um den Abstand des Endes des gemeinsamen Bündels 16 zu der Oberfläche der Trommel 32 bzw. zu der Speicherleuchtstoffolie 34 einzustellen. Die Positioniereinheit 46 bewegt das gemeinsame Bündel somit entlang einer zweiten Achse, die senkrecht auf der ersten Achse ist, wie es durch einen Positionierungspfeil 48 angedeutet ist. Der Abstand zwischen dem einen Ende 12a der Anregungsglasfaser 12 und der Speicherleuchtstoffolie 34 legt die Auflösung fest, mit der die Speicherleuchtstoffolie ausgelesen werden kann, wie es weiter oben bereits erläutert wurde.

Verschiedene Steuerleitungen 50 ermöglichen eine synchronisierte Steuerung des Glasfaser-Trommelscanners durch die Steuereinheit 36, um einen koordinierten Betrieb des Motors 30, des Empfängers 26, der Lichtquelle 20, der Vorschubeinrichtung 42 sowie der Positionierungseinrichtung 46 zu ermöglichen. Die Steuereinrichtung ist wiederum über eine Hauptsteuerleitung 52 mit einem Rechner, wie z. B. einem Personalcomputer oder einer Workstation, verbunden.

Bei einem bevorzugten Ausführungsbeispiel des Glasfaser-Trommelscanners wird die Trommel 32 mittels des Motors 30 mit einer konstanten Geschwindigkeit gedreht. Die Vorschubeinrichtung 42 bewegt gleichzeitig das gemeinsame Bündel 16 über die Speicherleuchtstoffolie 34, wodurch eine zweidimensionale Rasterabtastung derselben erreicht ist. Das gemeinsame Bündel 16 wird entsprechend der durch die Positioniereinheit 46 einstellbaren Auflösung somit nur entlang der ersten Achse bewegt, da die Abtastung entlang der zweiten Achse durch die rotierende Trommel 32 bewirkt wird.

Vorzugsweise wird die Verstärkerschaltung 26 derart getriggert, daß ein Bild der Speicherleuchtstoffolie 34 aufgenommen werden kann. Insbesondere werden nur die Bereiche der Trommel als gültige Bilddaten betrachtet, die vorher in einem Programm eingestellt worden sind. Wie es aus Fig. 4 offensichtlich ist, muß nicht die gesamte Trommeloberfläche mit einer Speicherleuchtstoffolie versehen sein. Es können Speicherleuchtstoffolien 34 auf der Trommel 32 befestigt werden, welche eine beliebige Größe haben können. Es können auch mehrere Folien gleichzeitig aufgebracht werden. Das Anregungslicht der Lichtquelle 20 kann derart gesteuert werden, daß die Lichtquelle 20 eingeschaltet wird, wenn sich ein gültiger Datenbereich vor dem einen Ende 12a der Anregungsglasfaser befindet. Vorzugsweise wird das Anregungslicht ausgeschaltet, wenn kein gültiger Datenbereich vor dem einen Ende 12a ist. Somit wird ein Anregen der Folie durch Streulicht verhindert, wenn sich dieselbe auf der Rückseite der Trommel 32 befindet, und/oder wenn das eine Ende 12a der Anregungsglasfaser 12 zur Ausleseposition hin bewegt wird.

## Patentansprüche

1. Anordnung (10) zum Auslesen photostimulierbarer Speicherleuchtstoffe (34) mit folgenden Merkmalen:
einer Anregungsglasfaser (12), in die mittels einer Lichtquelle (20) Licht einkoppelbar ist, das den Speicherleuchtstoff (34) anregt; und
einer Aufnahmeglasfaser (14), in die ein von einem angeregten Speicherleuchtstoff (34) abgegebenes Licht einkoppelbar ist,
wobei ein Ende (12a) der Anregungsglasfaser (12), das nahe an dem Speicherleuchtstoff (34) positionierbar ist, neben einem nahe an dem Speicherleuchtstoff (34) positionierbaren Ende (14a) der Aufnahmeglasfaser (14) angeordnet ist,
dadurch gekennzeichnet,
daß die Anregungsglasfaser (12) eine erste Numerische Apertur aufweist,
daß die Aufnahmeglasfaser (14) eine gegenüber der ersten Numerischen Apertur große zweite Numerische Apertur aufweist,
daß das von der Anregungsglasfaser (12) ausgekoppelte Licht ohne Optikanordnung direkt auf den Speicherleuchtstoff (34) gerichtet wird, und
daß das von dem Speicherleuchtstoff (34) abgegebene Licht ohne Optikanordnung direkt in die Aufnahmeglasfaser (14) eingekoppelt wird.

2. Anordnung nach Anspruch 1,
die eine Mehrzahl von Aufnahmeglasfasern (14) aufweist, wobei die einen Enden (14b) der Mehrzahl von Aufnahmeglasfasern (14) um das eine Ende (12b) der Anregungsglasfaser (12) herum angeordnet sind.

3. Anordnung nach Anspruch 1 oder 2,
bei der die Anregungsglasfaser (12) eine monomodige Glasfaser ist.

4. Anordnung nach einem der vorhergehenden Ansprüche,
bei der die Numerische Apertur der Anregungsglasfaser (12) in einem Bereich von 0,1 bis 0,2 liegt und vorzugsweise 0,12 beträgt.

5. Anordnung nach einem der vorhergehenden Ansprüche,
bei der die Numerische Apertur der Aufnahmeglasfaser (14) in einem Bereich von 0,4 bis 0,9 liegt und vorzugsweise 0,5 beträgt.

6. Glasfaser-Trommelscanner mit folgenden Merkmalen:
einer Glasfaseranordnung (10) nach einem der Ansprüche 1 bis 5;
einer Anregungslichtquelle (20), deren Licht in ein anderes Ende (12b) der Anregungsglasfaser (12) einkoppelbar ist;
einer Empfängereinheit (24, 26) zum Empfangen von in der Aufnahmeglasfaser (14) übertragenem Licht;
einer um eine erste Achse (40) drehbaren Trommeleinheit (32), auf deren Umfangsoberfläche der Speicherleuchtstoff (34) befestigbar ist;
einer Vorschubeinrichtung (42) zum Verschieben der nahe aneinander angeordneten Enden (12a, 14a) entlang der ersten Achse (40); und
einer Steuereinheit (36, 38) zum Synchronisieren des Betriebs der Anregungslichtquelle (20), der Empfängereinheit (24, 26), der Trommeleinheit (30, 32) und der Vorschubeinrichtung (42).

7. Glasfaser-Trommelscanner nach Anspruch 6,
der ferner eine Positioniereinheit (46) zum Positionieren der nahe aneinander angeordneten Enden (12a, 14a) der Anregungsglasfaser (12) und der Aufnahmeglasfaser (14) entlang einer zu der ersten Achse senkrechten zweiten Achse (48) aufweist, um einen Abstand der einen Enden (12a, 14a) zu dem Trommelumfang (32) einzustellen.

8. Glasfaser-Trommelscanner nach Anspruch 6 oder 7,
bei dem die Anregungslichtquelle (20) durch die Steuereinheit (36, 38) aufgrund vorher eingestellter Daten triggerbar ist, damit die Anregungslichtquelle (20) nur dann Licht aussendet, wenn sich ein durch die voreingestellten Daten identifizierter Bereich des Speicherleuchtstoffs (34) in der Nähe der einen Enden (12a, 14a) der Anregungsglasfaser (12) und der Aufnahmeglasfaser (14) befindet.

9. Glasfaser-Trommelscanner nach einem der Ansprüche 6 bis 8,
dessen Auflösung durch die Numerische Apertur der Anregungsglasfaser (12) und durch den Abstand des einen Endes (12a) derselben zu der Oberfläche der Trommel (32) einstellbar ist.

## Claims

1. An arrangement (10) for reading photo-stimulable storage luminescent substances (34) comprising:
an excitation glass fibre (12) into which light which excites the storage luminescent substance (34) can be fed by means of a light source (20); and
a receiving glass fibre (14) into which the light produced by an excited storage luminescent substance (34) can be fed,
wherein that end (12a) of the excitation glass fibre (12) which is positionable so as to be close to the storage luminescent substance (34) is arranged adjacent to that end (14a) of the receiving glass fibre (14) which is positionable so as to be close to the storage luminescent substance (34),
characterized in
that the excitation glass fibre (12) has a first numerical aperture, and
that the receiving glass fibre (14) has a second numerical aperture which is large compared with the first numerical aperture,
that the light which is fed out of the excitation glass fibre (12) is directed straight onto the storage luminescent substance (34) without an optical arrangement, and
that the light output from the storage luminescent substance (34) can be received by the receiving glass fibre (14) without an optical arrangement.

2. An arrangement according to claim 1,
which has a plurality of receiving glass fibres (14), the one ends (14b) of the plurality of receiving glass fibres (14) being arranged around the one end (12b) of the excitation glass fibre (12).

3. An arrangement according to claim 1 or 2,
wherein the excitation glass fibre (12) is a monomode glass fibre.

4. An arrangement according to one of the preceding claims,
wherein the numerical aperture of the excitation glass fibre (12) lies in a range from 0.1 to 0.2 and preferably has a value of 0.12.

5. An arrangement according to one of the preceding claims,
wherein the numerical aperture of the receiving glass fibre (14) lies in a range from 0.4 to 0.9 and preferably has a value of 0.5.

6. A glass fibre drum scanner comprising:
a glass fibre arrangement (10) according to one of the claims 1 to 5;
an excitation light source (20) whose light can be fed into another end (12b) of the excitation glass fibre (12);
a receiver unit (24, 26) for receiving light transmitted in the receiving glass fibre (14);
a drum unit (32) rotatable about a first axis (40) and to the curved surface of which the the storage luminescent substance (34) can be affixed;
an advancing device (42) for moving the closely arranged ends (12a, 14a) along the first axis (40); and
a control unit (36, 38) for synchronizing operation of the excitation light source (20), the receiver unit (24, 26), the drum unit (30, 32) and the advancing device (42).

7. A glass fibre drum scanner according to claim 6,
which furthermore has a positioning unit (46) for positioning the closely arranged ends (12a, 14a) of the excitation glass fibre (12) and the receiving glass fibre (14) along a second axis (48), which is perpendicular to the first axis, so as to set the separation of the one ends (12a, 14a) from the curved surface of the drum (32).

8. A glass fibre drum scanner according to claim 6 or 7,
such that the excitation light source (20) can be triggered by the control unit (36, 38) on the basis of previously set data in order that the excitation light source (20) only emits light when a region of the storage luminescent substance (34) which is identified by the preset data is located near the one ends (12a, 14a) of the excitation glass fibre (12) and the receiving glass fibre (14).

9. A glass fibre drum scanner according to one of the claims 6 to 8,
whose resolution can be set by means of the numerical aperture of the excitation glass fibre (12) and by means of the separation of the one end (12a) of the same from the surface of the drum (32).

## Revendications

1. Système (10) pour sélectionner des substances luminescentes accumulatrices photostimulables (34), aux caractéristiques suivantes :
une fibre de verre d'activation (12) dans laquelle peut être couplée, à l'aide d'une source de lumière (20), de la lumière excitant la substance luminescente accumulatrice (34) ; et
une fibre de verre de réception (14) dans laquelle peut être couplée de la lumière émise par une substance luminescente accumulatrice (34) activée,
l'une (12a) des extrémités de la fibre de verre d'activation (12), qui peut être positionnée près de la substance luminescente accumulatrice (34), étant disposée près d'une extrémité (14a) de la fibre de verre de réception (14) pouvant être positionnée près de la substance luminescente accumulatrice (34),
caractérisé par le fait
que la fibre de verre d'activation (12) présente une première ouverture numérique,
que la fibre de verre de réception (14) présente une seconde ouverture numérique, grande par rapport à la première ouverture numérique,
que la lumière découplée par la fibre de verre d'activation (12) est orientée directement vers la substance luminescente accumulatrice (34), sans dispositif optique, et
que la lumière émise par la substance luminescente accumulatrice (34) est couplée directement dans la fibre de verre de réception (14), sans dispositif optique.

2. Système suivant la revendication 1, présentant une pluralité de fibres de verre de réception (14), les unes (14b) des extrémités de la pluralité de fibres de verre de réception (14) étant disposées autour de l'une (12b) des extrémités de la fibre de verre d'activation (12).

3. Système suivant la revendication 1 ou 2, dans lequel la fibre de verre d'activation (12) est une fibre de verre monomode.

4. Système suivant l'une des revendications précédentes, dans lequel l'ouverture numérique de la fibre de verre d'activation (12) se situe dans une plage de 0,1 à 0,2 et est, de préférence, de 0,12.

5. Système suivant l'une ou l'autre des revendications précédentes, dans lequel l'ouverture numérique de la fibre de verre de réception (14) se situe dans une plage de 0,4 à 0,9 et est, de préférence, de 0,5.

6. Scanner à tambour à fibres de verre, aux caractéristiques suivantes :
un système à fibres de verre (10) suivant l'une des revendications 1 à 5 ;
une source de lumière d'activation (20) dont la lumière peut être couplée dans une autre extrémité (12b) de la fibre de verre d'activation (12) ;
une unité de réception (24, 26) destinée à recevoir la lumière transmise à la fibre de verre de réception (14) ;
une unité de tambour (32) rotative autour d'un premier axe (40), à la surface périphérique de laquelle peut être fixée la substance luminescente accumulatrice (34) ;
un dispositif d'avance (42) destiné à déplacer, le long du premier axe (40), les extrémités (12a, 14a) disposées l'une près de l'autre ; et
une unité de commande (36, 38) destinée à synchroniser le fonctionnement de la source de lumière d'activation (20), de l'unité de réception (24, 26), de l'unité de tambour (30, 32) et du dispositif d'avance (42).

7. Scanner à tambour à fibres de verre suivant la revendication 6, présentant, par ailleurs, une unité de positionnement (46) destinée à positionner les extrémités (12a, 14a), disposées l'une près de l'autre, de la fibre de verre d'activation (12) et de la fibre de verre de réception (14) le long d'un second axe (48) perpendiculaire au premier axe, afin de régler une distance des unes extrémités extrémités (12a, 14a) par rapport au pourtour du tambour (32).

8. Scanner à tambour à fibres de verre suivant la revendication 6 ou 7, dans lequel la source de lumière (20) peut être déclenchée par l'unité de commande (36, 38), sur base de données préréglées, de manière que la source de lumière (20) ne transmette de la lumière que lorsqu'une zone de la substance luminescente accumulatrice (34) pouvant être identifiée par les données préréglées se situe à proximité des unes extrémités (12a, 14a) de la fibre de verre d'activation (12) et de la fibre de verre de réception (14).

9. Scanner à tambour à fibres de verre suivant l'une des revendications 6 à 8, dont la résolution peut être réglée par l'ouverture numérique de la fibre de verre d'activation (12) et la distance de l'une (12a) des extrémités de celui-ci par rapport à la surface du tambour (32).
